# EUROPÄISCHE PATENTSCHRIFT

(11) **EP 3 755 930 B1**
(45) Veröffentlichungstag und Bekanntmachung des Hinweises auf die Patenterteilung: **15.11.2023**
(21) Anmeldenummer: 18793366.8
(22) Anmeldetag: 09.10.2018
(51) Int. Cl.: F16K 31/00, F24D 19/10

(54) **STELLANTRIEB FÜR EIN VENTIL SOWIE ANORDNUNG MIT EINEM SOLCHEN VENTIL UND VERFAHREN ZUR MONTAGE DESSELBEN**
ACTUATING DRIVE FOR A VALVE, AND ARRANGEMENT HAVING A VALVE OF THIS TYPE, AND METHOD FOR THE ASSEMBLY THEREOF
ENTRAÎNEMENT DE RÉGLAGE POUR UNE SOUPAPE AINSI QU'ENSEMBLE ÉQUIPÉ D'UNE SOUPAPE DE CE TYPE, ET PROCÉDÉ DE MONTAGE ASSOCIÉ

(30) Priorität: 23.02.2018 DE 102018104149
(43) Veröffentlichungstag der Anmeldung: 30.12.2020
(73) Patentinhaber: STRAUB KG, 73337 Bad Überkingen (DE)
(72) Erfinder: STRAUB, Philipp, 73337 Bad Überkingen (DE); STRAUB, Thomas, 73337 Bad Überkingen (DE)
(74) Vertreter: Kuhnen & Wacker Patent- und Rechtsanwaltsbüro PartG mbB
(86) Internationale Anmeldenummer: PCT/EP2018/077434
(87) Internationale Veröffentlichungsnummer: WO 2019/161945

(56) Entgegenhaltungen:
- EP-A1- 2 889 523
- EP-A2- 1 235 128
- WO-A2-2014/149721
- DE-A1-102004 063 421
- DE-A1-102009 044 066
- GB-A- 1 239 839
- US-A1- 2014 302 955

## Beschreibung

Die Erfindung betrifft einen Stellantrieb für ein Ventil mit einem Gehäuseabschnitt und wenigstens einem am Gehäuseabschnitt angeordneten Rastmittel, welches in Radialrichtung federnd zwischen einer Freigabestellung und einer Raststellung bewegbar und in Richtung auf die Raststellung vorgespannt ist, und mit einem Sicherungsring, welcher drehbar am Gehäuseabschnitt angeordnet ist und wenigstens ein zu dem wenigstens einen Rastmittel komplementäres Sperrglied aufweist. Ferner betrifft die Erfindung eine Anordnung mit einem solchen Stellantrieb und ein Verfahren zur Montage eines Stellantriebs an einem Ventil.

Ein solcher Stellantrieb und eine solche Anordnung sind z.B. aus der DE 10 2012 007 739 A1 bekannt.

Derartige Stellantriebe werden unter Anderem zum Steuern oder Regeln eines Raumtemperierungssystems in Gebäuden eingesetzt, um die Innentemperatur eines Raumes in engen Grenzen auf einer angenehmen oder, z.B. bei Kühlhäusern für verderbliche Waren, geeigneten Lagertemperatur zu halten. Dabei regeln oder steuern die Stellantriebe die Durchflussmenge eines die Wärme oder Kälte transportierenden Fluides, zumeist Wasser, durch einen Heiz- oder Kühlkreislauf (nachfolgend zur Vereinfachung einfach Kreislauf genannt), wie zum Beispiel in einem oder mehreren Heizkörpern oder einer Flächenheizung, etwa einer Fußbodenheizung oder Wandflächenheizung, oder einer Kühldecke. Der Stellantrieb steuert oder regelt dabei den Durchflussquerschnitt für das Fluid durch ein Ventil, beispielsweise einem Rücklaufventil, seltener auch einem Vorlaufventil.

Der Stellantrieb wird als gesondertes Bauelement hergestellt und vertrieben und auf der Baustelle am Ventil montiert. Obwohl im Stand der Technik bereits alternative Methoden beschrieben wurden, wird der Stellantrieb in der Praxis meist immer noch mit einem seinem Gehäuse zugeordneten Mutterngewinde, oft mittels einer Überwurfmutter, mit einem dem Ventil zugeordneten Bolzengewinde aufwendig verschraubt.

So beschreiben die DE 296 06 663 U1 und die EP 1 970 609 A1 als eine alternative Methode, den Stellantrieb mittels einer Art Bajonettverschluss an dem Ventil zu montieren.

Die DE 10 2004 063 421 A1, EP 2 889 523 A1, DE 93 18 911 U1, DE 85 35 987 U1, DE 100 49 328 A1 und die eingangs bereits genannte DE 10 2012 007 739 A1 beschreiben einen Stellantrieb, der mittels Rastmitteln an dem Ventil befestigt werden kann. Konkret greifen dem Stellantrieb zugeordnete Rastzungen in eine umlaufende Nut am Ventil. Nach insoweit erfolgter Montage des Stellantriebs am Ventil wird ein Sicherungsring über den Rastzungen positioniert, so dass diese nicht ungewollt in ihre Freigabestellung zurückfedern können.

Bei den Stellantrieben nach der DE 10 32012 007 739 A1 und der DE 100 49 328 A1 dient jeweils eine Überwurfmutter als Sicherungsring. Abgesehen davon, dass über das Rastmittel eine vorläufige Montage des Stellantriebs am Ventil erfolgt, ist die Sicherung der Verbindung durch Verschrauben immer noch vergleichsweise auf wendig.

Aus der DE 85 35 987 Ul ist ein Stellantrieb bekannt, bei welcher der Sicherungsring nach einer ersten Ausführungsform als eine Art Mutter ausgebildet ist, jedoch ein relativ steiles Gewinde aufweist, so dass nur eine Viertel-Umdrehung der Mutter zum Sichern bzw. Lösen erforderlich sein soll. Nach einer anderen Ausführungsform ist ein Klemmring vorgesehen, der axial über die Rastmittel geschoben wird.

Die DE 93 18 911 U1 offenbart eine Klemmschelle nach Art einer Schlauchschelle als Sicherungsring. Der Sicherungsring muss also erst aufwendig über eine Spannschraube verspannt werden.

Die EP 2 889 523 A1 lehrt einen als Schiebering ausgebildeten Sicherungsring, der durch axiales Verschieben in die Sicherungsstellung bewegt wird. Allerdings zeigt die Schrift einen Adapterring, der in herkömmlicher Weise auf das Gewinde des Ventils geschraubt wird. Bevor der Stellantrieb an dem Adapterring montiert werden kann.

Bei dem Stellantrieb nach der DE 10 2004 063 421 A1 wird der Sicherungsring ähnlich einem Bajonettverschluss zunächst axial in die Sicherungsstellung verschoben und dann um eine gewisse Winkelstellung verdreht, um ihn gegen ungewolltes Zurückdrehen zu sichern.

Ausgehend von diesem Stand der Technik liegt der Erfindung das Problem zugrunde, die Montage des Stellantriebs am Ventil weiter zu vereinfachen.

Zur Lösung dieses Problems offenbart der erfindungsgemäße Stellantrieb, dass das wenigstens eine Sperrglied ein Vorsprung ist, welcher in Umfangsrichtung des Sicherungsrings benachbart eine zum Rastmittel korrespondierende Ausnehmung aufweist, zwischen zwei benachbarten Rastmitteln eine Zunge angeordnet ist, auf welcher der Sicherungsring drehbar gelagert ist, und der Sicherungsring drehbar am Gehäuseabschnitt angeordnet und in Axialrichtung festgelegt ist. Die erfindungsgemäße Anordnung weist einen solchen Stellantrieb und ein Ventil mit wenigstens einem zu dem Rastmittel des Stellantriebs korrespondierenden Rastmittel auf.

Aufgrund der erfindungsgemäßen Ausbildung braucht der Sicherungsring gemäß dem erfindungsgemäßen Verfahren nur in Umfangsrichtung verdreht zu werden, nachdem die komplementären Rastmittel des Stellantriebs und des Ventils miteinander in Eingriff gelangt sind, um die Rastverbindung zwischen dem Stellantrieb und dem Ventil zu sichern. Eine zusätzliche Axialbewegung ist nicht mehr erforderlich.

Erfindungsgemäß sind zwei oder mehr Rastmittel und dazu korrespondierende Stellglieder am Umfang verteilt angeordnet. Diese sind bevorzugt äquidistant angeordnet. Dadurch ergibt sich eine gute und stabile Verbindung.

Zwischen benachbarten Rastmitteln sind erfindungsgemäß Zungen angeordnet , auf welchen der Sicherungsring drehbar gelagert ist. Hierdurch lässt sich die axiale Länge des Sicherungsrings minimieren, da die Zungen den Raum zwischen benachbarten Rastmitteln nutzen.

Um ein ungewolltes Verdrehen des Sicherungsrings aus der Sperrstellung heraus zu vermeiden, kann der Sicherungsring in der Sperrstellung gesichert sein. Dieses kann zum Beispiel dadurch geschehen, dass der Sicherungsring in die Sperrstellung vorgespannt ist, oder durch andere geeignete Sicherungsmittel. Die Vorspannung in Richtung auf die Sperrstellung kann auch unabhängig von der Sicherung des Sicherungsrings vorgesehen sein.

Das dem Ventil zugeordnete Rastmittel kann nach einer einfachen konstruktiven Ausgestaltung eine Schulter aufweisen, welche bei am Ventil montierten Stellantrieb von dem Rastmittel des Stellantriebs hintergriffen ist. Vorzugsweise ist eine umlaufende Schulter vorgesehen, die Teil einer umlaufenden Nut sein kann.

Die Erfindung wird nachfolgend anhand eines in der Zeichnung näher gezeigten Ausführungsbeispiels erläutert. In der Zeichnung zeigen:
Fig. 1 einen Gehäuseteil eines Stellantriebs mit den Erfindungsmerkmalen und ein Ventil in demontiertem Zustand in einem Längsschnitt;
Fig. 2 den Gehäuseteil und das Ventil gemäß Fig. 1 in teilmontiertem Zustand in einem Längsschnitt;
Fig. 3 den Gehäuseteil und das Ventil gemäß Fig. 1 in fertig montiertem Zustand in einem Längsschnitt;
Fig. 4 den Gehäuseteil und das Ventil gemäß Fig. 1 in teilmontiertem Zustand in perspektivischer Draufsicht;
Fig. 5 den Gehäuseteil und das Ventil gemäß Fig. 1 in fertig montiertem Zustand in perspektivscher Draufsicht.

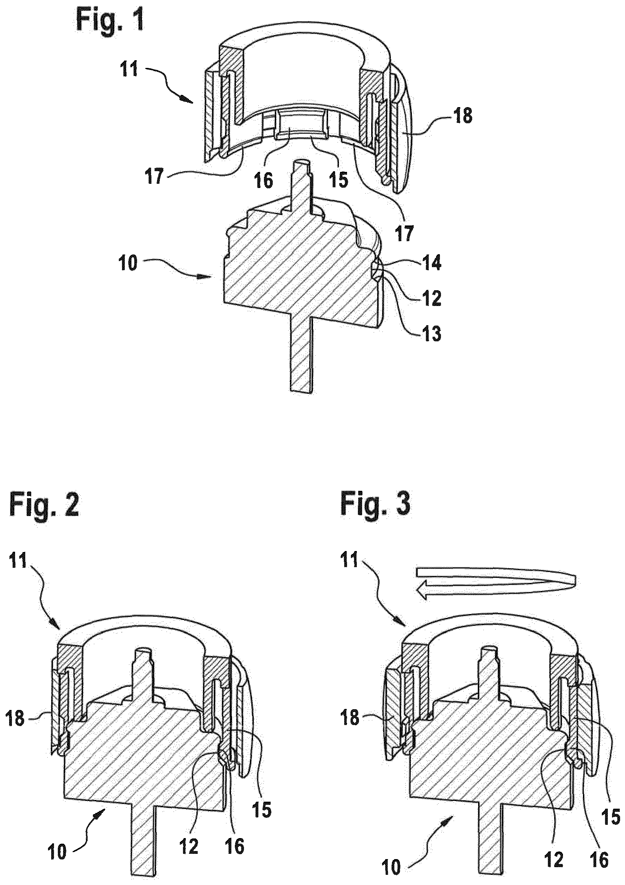

Fig. 1 zeigt schematisch einen Längsschnitt eines Ventils 10 und eines Gehäuseabschnitts 11 eines nicht näher gezeigten Gehäuses eines Stellantriebs in einem Zustand, in welchem der Stellantrieb noch nicht an dem Ventil 10 montiert ist. Der Gehäuseabschnitt 11 ist in der Regel einstückig mit dem übrigen Gehäuse verbunden.

Das Ventil 10 weist eine umlaufende Nut 12 auf, welche im vorliegenden Fall trapezförmig ausgebildet ist, jedoch auch eine andere geeignete Form aufweisen kann. Die Nut 12 weist eine zum Stellantrieb weisende, erste Schulter 13 und eine der ersten Schulter 13 gegenüberliegende Schulter 14 auf. Entsprechend der trapezförmigen Form der Nut 12 verlaufen die Schultern 13, 14 nicht genau radial, sondern leicht schräg, so dass die Schultern 13, 14 radial nach außen voneinander divergieren. Die Nut 12 erweitert sich also in Radialrichtung nach außen gesehen.

Der Stellantrieb weist an seinem dem Ventil 10 zugewandten Gehäuseabschnitt 11 einen Kranz aus vier Rastzungen 15 mit je einem Rastvorsprung 16 auf. Jeder Rastvorsprung 16 weist eine zum Querschnitt der Nut 12 korrespondierende Form, also vorliegend ebenfalls einen trapezförmigen Querschnitt auf. Ferner ist zwischen zwei benachbarten Rastzungen 15 jeweils eine Zunge 17 vorgesehen, deren Funktion nachfolgend noch erläutert wird.

Am Gehäuseabschnitt 11 ist ein Sicherungsring 18 vorgesehen. Der Sicherungsring 18 ist am Gehäuseabschnitt 11 drehbar gelagert jedoch in Axialrichtung festgelegt, also unverschiebbar. Hierzu dienen die Zungen 17. Um den Sicherungsring 18 leichter per Hand drehen zu können, kann der Sicherungsring 18 wie gezeigt an seinem Außenumfang profiliert sein.

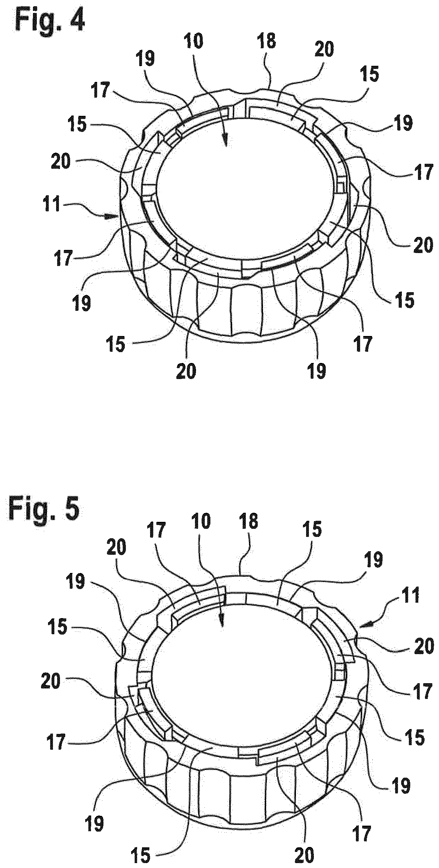

An seinem Innenumfang weist der Sicherungsring 18 äquidistant am Umfang verteilt angeordnete nach innen vorspringende Vorsprünge 19 auf, die sich mit Ausnehmungen 20 abwechseln. Die Vorsprünge 19 und Ausnehmungen 20 korrespondieren dabei zu den Rastzungen 15, derart, dass die Rastzungen 15 in die Ausnehmungen 20 gelangen können, wenn sie sich durch eine entsprechende Drehung des Sicherungsrings 18 mit ihnen decken (Fig. 4), während die Vorsprünge 19 eine solche Bewegung der Rastzungen 15 verhindern (sperren), wenn die Vorsprünge 19 durch eine entsprechende Drehung des Sicherungsrings 18 radial außen an den Rastzungen 15 anliegen (Fig. 5).

Die Montage des insoweit beschrieben Stellantriebs am Ventil 10 erfolgt nun wie folgt:
Zunächst wird der Sicherungsring 18 in eine Montagestellung gebracht, in welcher die Rastzungen 15 in die Ausnehmungen 20 zurückweichen können. Nun wird der Stellantrieb mit seinem Gehäuseabschnitt 11 auf das Ventil 10 gedrückt. Dabei federn die elastischen Rastzungen 15 aufgrund der Kontur der Rastvorsprünge 16 radial nach außen, bis die Rastvorsprünge 16 nach weiterem Verschieben des Stellantriebs in Richtung auf das Ventil 10 aufgrund ihrer Vorspannung in die Nut 12 zurückfedern können. Der Stellantrieb (Gehäuseabschnitt 11) ist nun am Ventil 10 vorverrastet (Fig. 2 und 4).

Nun wird der Sicherungsring 18 entsprechend der Teilung der Rastzungen 15 (also bei vorliegend vier Rastzungen 15 um etwa 45 °) in Umfangsrichtung verdreht, so dass die Vorsprünge 19 außen an den Rastzungen 15 anliegen (Fig. 5). Die Rastzungen 15 können nun nicht mehr nach außen zurückfedern. Die Verbindung zwischen dem Stellantrieb (Gehäuseabschnitt 11) und dem Ventil 10 ist gesichert / gesperrt.

Zu diesem beschriebenen Ausführungsbeispiel sind einige Abwandlungen denkbar. So können zwei, drei, fünf oder mehr Rastzungen 15 und eine entsprechende Anzahl von Vorsprüngen 19 und Ausnehmungen 20 am Sicherungsring 18 vorgesehen sein. Auch müssen diese nicht, wie gezeigt, äquidistant am Umfang verteilt angeordnet sein, sondern können auch unterschiedliche Abstände haben. Ferner braucht nicht unbedingt immer zwischen zwei benachbarten Rastzungen 15 eine Zunge 17 angeordnet sein, und umgekehrt.

Ferner ist im gezeigten Ausführungsbeispiel durch die korrespondierende Querschnittsform der Nut 12 und der Rastvorsprünge 16 eine spielfreie formschlüssige axiale Festlegung des Gehäuseabschnitts 11 am Ventil 10 gegeben. Auch dieses kann in anderer Weise gelöst sein, z.B. indem die Rastvorsprünge 16 lediglich hinter die erste Schulter 13 greifen und in Gegenrichtung ein anderweitiger Anschlag gegeben ist, zum Beispiel an einer Stirnfläche des Ventils 10 oder eine anderweitigen Schulter des Ventils 10, an welchem der Gehäuseabschnitt 11 mit seiner Stirnfläche oder einer anderen Schulter anschlägt. Es kann dann ausreichen, statt der Nut 12 lediglich eine Abstufung mit nur einer ersten Schulter 13 vorzusehen. Ferner muss die axiale Festlegung nicht unbedingt vollständig spielfrei sein. Ein geringes Spiel kann durchaus geduldet werden.

Ferner braucht keine umlaufende Nut 12 vorgesehen sein. Vielmehr würde es auch ausreichen, zu den Rastvorsprüngen 16 korrespondierende Taschen am Ventil 10 vorzusehen.

Ferner kann der Sicherungsring 18 in seine Sperrstellung durch ein geeignetes Mittel, beispielsweise eine Drehfeder, vorgespannt sein. Zusätzlich oder alternativ kann der Sicherungsring 18 in seiner Sperrstellung arretiert sein, um ein ungewolltes Löschen zu verhindern. Dieses kann in Form der vorgenannten Vorspannung selbst oder durch geeignete gesonderte Sicherungsmittel erfolgen. Ferner kann dann Sicherung auch durch bloße Reibung der Vorsprünge 19 auf den Rastzungen 15 erfolgen.

### Bezugszeichenliste:

- 10: Ventil
- 11: Gehäuseabschnitt
- 12: Nut
- 13: Schulter
- 14: Schulter
- 15: Rastzunge
- 16: Rastvorsprung
- 17: Zunge
- 18: Sicherungsring
- 19: Vorsprung
- 20: Ausnehmung

## Patentansprüche

1. Stellantrieb für ein Ventil (10) mit einem Gehäuseabschnitt (11) und wenigstens einem am Gehäuseabschnitt (11) angeordneten Rastmittel (15), welches in Radialrichtung federnd zwischen einer Freigabestellung und einer Raststellung bewegbar und in Richtung auf die Raststellung vorgespannt ist, und mit einem Sicherungsring (18), welcher wenigstens ein zu dem wenigstens einen Rastmittel (15) komplementäres Sperrglied aufweist, wobei zwei oder mehr Rastmittel (15) und dazu korrespondierende Sperrglieder am Umfang verteilt angeordnet sind, **dadurch gekennzeichnet, dass**
das wenigstens eine Sperrglied ein Vorsprung (19) ist, welcher in Umfangsrichtung des Sicherungsrings (18) benachbart eine zum Rastmittel (15) korrespondierende Ausnehmung (20) aufweist,
zwischen zwei benachbarten Rastmitteln (15) eine Zunge (17) angeordnet ist, auf welcher der Sicherungsring (18) drehbar gelagert ist, und
der Sicherungsring (18) drehbar am Gehäuseabschnitt (11) angeordnet und in Axialrichtung festgelegt ist.

2. Stellantrieb nach Anspruch 1, **dadurch gekennzeichnet, dass** der Sicherungsring (18) in einer Sperrstellung gesichert ist.

3. Stellantrieb nach Anspruch 1 oder 2, **dadurch gekennzeichnet, dass** der Sicherungsring (18) in eine Sperrstellung vorgespannt ist.

4. Anordnung mit einem Stellantrieb nach einem der Ansprüche 1 bis 3 und einem Ventil (10) mit wenigstens einem zu dem Rastmittel (15) des Stellantriebs korrespondierenden Rastmittel (12).

5. Anordnung nach Anspruch 4, **dadurch gekennzeichnet, dass** das wenigstens eine Rastmittel (12) am Ventil eine Schulter (13) aufweist, die bei am Ventil (10) montierten Stellantrieb von dem Rastmittel (15) des Stellantriebs hintergriffen ist.

6. Anordnung nach Anspruch 5, **dadurch gekennzeichnet, dass** die Schulter (13) eine umlaufende Schulter (13) ist.

7. Anordnung nach Anspruch 6, **dadurch gekennzeichnet, dass** das Rastmittel (12) eine in Umfangsrichtung umlaufende Nut mit der Schulter (13) als eine Begrenzung aufweist oder ist.

8. Verfahren zur Montage eines Stellantriebs an einem Ventil (10) eines Wärmetauschers zur Bildung einer Anordnung nach einem der Ansprüche 4 bis 7, indem der Stellantrieb auf das Ventil (10) gedrückt wird, so dass die komplementären Rastmittel (12, 15) des Stellantriebs und des Ventils (10) miteinander in Eingriff gelangen und die Rastverbindung sodann gesichert wird, indem der Sicherungsring (18) in seine Sperrstellung verdreht wird, **dadurch gekennzeichnet, dass** der Sicherungsring (18) zum Erreichen der Sperrstellung ausschließlich gedreht wird.

## Claims

1. Actuating drive for a valve (10) having a housing portion (11) and at least one latching means (15) which is arranged on the housing portion (11) and which is resiliently movable in the radial direction between a release position and a latching position and is biased in the direction of the latching position, and having a securing ring (18) which comprises at least one blocking member which is complementary to the at least one latching means (15), wherein two or more latching means (15) and blocking members corresponding thereto are arranged distributed on the circumference, **characterized in that**
the at least one blocking member is a protrusion (19) which has, adjacent thereto, a recess (20) corresponding to the latching means (15) in the circumferential direction of the securing ring (18),
a tongue (17) is arranged between two adjacent latching means (15), the securing ring (18) being rotatably mounted on said tongue, and
the securing ring (18) is rotatably mounted on the housing portion (11) and is fixed in the axial direction.

2. The actuating drive according to claim 1, **characterized in that** the securing ring (18) is secured in a blocking position.

3. The actuating drive according to claim 1 or 2, **characterized in that** the securing ring (18) is biased into a blocking position.

4. Assembly having an actuating drive according to any one of claims 1 to 3 and a valve (10) having at least one latching means (12) corresponding to the latching means (15) of the actuating drive.

5. Assembly according to claim 4, **characterized in that** the at least one latching means (12) comprises a shoulder (13) on the valve, the latching means (15) of the actuating drive engaging behind the shoulder when the actuating drive is mounted on the valve (10).

6. Assembly according to claim 5, **characterized in that** the shoulder (13) is a circumferential shoulder (13).

7. Assembly according to claim 6, **characterized in that** the latching means (12) comprises or is a circumferential groove, in the circumferential direction, having the shoulder (13) as a boundary.

8. Method for mounting an actuating drive on a valve (10) of a heat exchanger for forming an assembly according to any one of claims 4 to 7, in that the actuating drive is pressed onto the valve (10) so that the complementary latching means (12, 15) of the actuating drive and of the valve (10) are engaged with each other and the latching connection is then secured, in that the securing ring (18) is rotated into its blocking position, **characterized in that** the securing ring (18) is exclusively rotated to reach the blocking position.

## Revendications

1. Entraînement de réglage pour une soupape (10) comprenant un segment de boîtier (11) et au moins un élément d'arrêt (15) logé dans le segment de boîtier (11) et qui est mobile dans la direction radiale, de manière élastique entre une position de libération et une position d'arrêt et est précontraint en direction de la position d'arrêt, ainsi qu'avec une bague de sécurité (18) qui comporte un organe de blocage complémentaire à au moins un élément d'arrêt (15),
deux ou plusieurs éléments d'arrêt (15) et des organes de blocage correspondants étant répartis à la périphérie,
entraînement **caractérisé en ce que**
- au moins un organe de blocage est un relief (19) qui comporte un évidement (20) correspondant à l'élément d'arrêt (15), au voisinage de la bague de sécurité (18) dans la direction périphérique,
- une languette (17) étant prévue entre deux éléments d'arrêt (15) voisins, et la bague de sécurité (18) est montée mobile sur cette languette, et
- la bague de sécurité (18) est montée à rotation sur le segment de boîtier (11) et se fixe dans la direction axiale.

2. Entraînement de réglage selon la revendication 1,
**caractérisé en ce que**
la bague de sécurité (18) est verrouillée dans une position de blocage.

3. Entraînement de réglage selon la revendication 1 ou 2,
**caractérisé en ce que**
la bague de sécurité (18) est précontrainte dans une position de blocage.

4. Dispositif comprenant un entraînement de réglage selon l'une des revendications 1 à 3 et une soupape (10) avec au moins un élément d'arrêt (12) correspondant à l'élément d'arrêt (15) de l'entraînement de réglage.

5. Dispositif selon la revendication 4,
**caractérisé en ce que**
l'élément d'arrêt (12) de la soupape comporte un épaulement (13) pris par derrière par l'élément d'arrêt (15) lorsque l'entraînement de réglage est monté sur la soupape (10).

6. Dispositif selon la revendication 5,
**caractérisé en ce que**
l'épaulement (13) est un épaulement périphérique.

7. Dispositif selon la revendication 6,
**caractérisé en ce que**
l'élément d'arrêt (12) comporte ou est une rainure périphérique dans la direction périphérique avec l'épaulement (13) comme limitation.

8. Procédé de montage d'un entraînement de réglage sur une soupape (10) d'un échangeur de chaleur pour former un dispositif selon l'une des revendications 4 à 7 en ce que l'entraînement de réglage est poussé sur la soupape (10) pour que les éléments d'arrêt complémentaires (12, 15) de l'entraînement de réglage et de la soupape (10) viennent en prise les uns avec les autres et ainsi la liaison d'arrêt est bloquée en ce qu'on tourne la bague de sécurité (18) dans sa position de blocage,
procédé **caractérisé en ce que**
on tourne uniquement la bague d'arrêt (18) pour arriver à la position de blocage.
